# NEUE EUROPÄISCHE PATENTSCHRIFT

(11) **EP 2 615 003 B2**
(45) Veröffentlichungstag und Bekanntmachung des Hinweises auf die Entscheidung über den Einspruch: **05.08.2020**
(45) Hinweis auf die Patenterteilung: 12.04.2017
(21) Anmeldenummer: 12008358.9
(22) Anmeldetag: 15.12.2012
(51) Int. Cl.: B60T 7/04, B60T 7/12, B60T 7/20, B60T 7/22, B60T 8/172, B60T 8/175, B60T 8/1755, B60T 8/26, B60T 8/88, B60T 13/66, B60T 13/68, B60T 17/02, B60T 17/22

(54) **Feststellbremsmodul für eine druckmittelbetriebene Bremsanlage eines zur Ankoppelung eines Anhängers geeigneten Fahrzeugs, Bremsanlage sowie Fahrzeug mit dem Feststellbremsmodul und Verfahren hierzu**
Parking brake module for a pressure-driven brake system of a vehicle suitable for coupling a trailer, brake system and vehicle equipped with the parking brake module and method for same
Module de frein de stationnement pour une installation de freinage entraînée par pression d'un véhicule adapté au couplage d'une remorque, installation de freinage et véhicule avec le module de frein de stationnement et procédé pour celui-ci

(30) Priorität: 13.01.2012 DE 102012000435
(43) Veröffentlichungstag der Anmeldung: 17.07.2013
(73) Patentinhaber: WABCO GmbH, 30453 Hannover (DE)
(72) Erfinder: Bensch, Uwe, 30161 Hannover (DE); Kiel, Bernd-Joachim, 31515 Wunstorf (DE); Otremba, Robert, 30952 Ronnenberg (DE); Strache, Wolfgang, 30966 Hemmingen (DE); Struwe, Otmar, 30519 Hannover (DE)
(74) Vertreter: Wasiljeff, Johannes M.B.

(56) Entgegenhaltungen:
- EP-A1- 1 504 975
- EP-A1- 2 055 541
- EP-A1- 2 055 542
- EP-A1- 2 199 162
- EP-A2- 1 923 284
- WO-A2-2008/113591
- DE-A1- 19 857 393
- DE-A1-102007 051 150
- DE-A1-102008 009 882
- DE-A1-102008 014 458
- DE-A1-102011 101 438
- DE-B3-102008 007 877

## Beschreibung

Die Erfindung betrifft ein Feststellbremsmodul, eine Bremsanlage sowie ein Fahrzeug mit dem Feststellbremsmodul und ein Verfahren zum Bereitstellen einer Feststellbremsfunktion mittels des Feststellbremsmoduls. Das Feststellbremsmodul ist für eine druckmittelbetriebene Bremsanlage eines Fahrzeugs vorgesehen, an das ein Anhänger angekoppelt werden kann. Das Fahrzeug ist somit ein Zugfahrzeug, das über einen eigenen Antrieb verfügt.

Zum Betrieb der Bremsanlage wird als Druckmittel vorzugsweise Druckluft eingesetzt, wobei die Bremsanlage eine pneumatische Bremsanlage ist. Alternativ kann die Bremsanlage jedoch auch eine hydraulische Bremsanlage sein, wobei als Druckmittel eine Hydraulikflüssigkeit, bspw. ein Hydrauliköl, eingesetzt wird.

Insbesondere dann, wenn die Bremsanlage eine pneumatische Bremsanlage ist, weist das Fahrzeug wenigstens einen Federspeicherbremszylinder auf, dessen Federspeicherteil im entlüfteten Zustand mittels der Kraft einer Feder eine Feststellbremse des Fahrzeugs einlegt. Zum Lösen der Feststellbremse gegen die Kraft dieser Feder, muss dieser Federspeicherteil belüftet werden. Das Belüften und Entlüften des Federspeicherteils erfolgt mittels des Feststellbremsmoduls.

Wenn das Fahrzeug zur Ankoppelung eines Anhängers vorgesehen ist, ist das Feststellbremsmodul auch zur Ansteuerung einer Anhängerbremse des Anhängers ausgebildet. Die Ansteuerung erfolgt dabei in der Regel über ein Anhängersteuerventil mit einer invertierenden Steuercharakteristik. Wenn ein Steuereingang des Anhängersteuerventils belüftet wird, werden Anhängerbremszylinder der Anhängerbremse entlüftet und somit gelöst. Zum Feststellen des Anhängers mittels der Anhängerbremse wird der Steuereingang des Anhängersteuerventils entlüftet, um die Anhängerbremszylinder zu belüften und die Anhängerbremse somit zu betätigen.

In Westeuropa bzw. Mitteleuropa sind zum Abstellen bzw. Parken eines Fahrzeugzugs mit dem Fahrzeug und dem Anhänger sowohl die Feststellbremse des Fahrzeugs als auch die Anhängerbremse zu betätigen bzw. einzulegen und betätigt bzw. eingelegt zu lassen. Dies wird mittels eines Feststellbremsmoduls erreicht, welches auch spannungslos sowohl einen zum Federspeicherteil des Federspeicherbremszylinders führenden Feststellbremsanschluss als auch einen zum Steuereingang des Anhängersteuerventils führenden Anhängersteuerventilanschluss entlüftet hält. Ein derartiges Feststellbremsmodul ist aus DE 103 36 611 A1, insbesondere Fig. 8, bekannt.

In anderen Ländern, insbesondere in Skandinavien, wird demgegenüber ein Abstellen bzw. Parken des Fahrzeugzugs mit ungebremstem Anhänger gefordert, das nachfolgend auch skandinavisches Parken genannt wird. Das aus DE 103 36 611 A1 bekannte Feststellbremsmodul weist den Nachteil auf, dass es nicht für das skandinavische Parken geeignet ist.

Aus DE 10 2007 008 504 A1, insbesondere Fig. 10, ist ein weiteres Feststellbremsmodul bekannt, das sowohl für den Einsatz in Westeuropa als auch für den Einsatz in Skandinavien geeignet ist. Dieses weitere Feststellbremsmodul weist hierfür zwei Anhängersteuerventilanschlüsse auf, die alternativ mechanisch mit dem Anhängersteuerventil zu verbinden sind, um das jeweils gewünschte Verhalten der Anhängerbremse beim Abstellen des Fahrzeugs zu erhalten. Der jeweils andere Anhängersteuerventilanschluss wird nicht genutzt und muss verstopft bzw. mechanisch verschlossen werden. Ein evtl. Umrüsten des Feststellbremsmoduls von der westeuropäischen Ausbildung, wonach die Anhängerbremse beim Parken betätig wird, auf die skandinavische Ausbildung, wonach die Anhängerbremse, beim Parken gelöst wird bzw. bleibt, erfordert bei dem aus DE 10 2007 008 504 A1 bekannten Feststellbremsmodul somit manuell durchzuführende konstruktive bzw. mechanische Änderungen an der Konfiguration der Bremsanlage.

Analoge Überlegungen gelten für die aus EP 2 199 162 A1 und aus EP 2 055 541 A1 bekannten Feststellbremsmodule, wobei diese Feststellbremsmodule ebenfalls zwei Anhängersteuerventilanschlüsse aufweisen, die alternativ mechanisch mit dem Anhängersteuerventil zu verbinden sind. Ferner ergibt sich ein unterschiedliches Schaltverhalten je nach Ausbildung des Feststellbremsmoduls, wodurch sich die Notwendigkeit einer abweichenden Steuereinrichtung ergibt.

Der Erfindung liegt die Aufgabe zugrunde, ein sicheres Abstellen eines Fahrzeugzugs mit einem Anhänger zu ermöglichen mit einem Feststellbremsmodul, welches ein Abstellen des Fahrzeugs wahlweise mit gebremstem oder ungebremstem Anhänger ermöglicht, insbesondere ohne eine an die jeweilige Wahl angepasste mechanische Konfiguration der Bremsanlage.

Die Erfindung löst diese Aufgabe mit einem Feststellbremsmodul nach Anspruch 1, einer druckmittelbetriebenen Bremsanlage nach Anspruch 7, einem Fahrzeug nach Anspruch 8 und einem Verfahren nach Anspruch 9.

Das Feststellbremsmodul ist für eine druckmittelbetriebene Bremsanlage eines zur Ankoppelung eines Anhängers geeigneten Fahrzeugs mit einer Feststellbremsfunktion vorgesehen und geeignet. Das Feststellbremsmodul weist einen Anhängersteuerventilanschluss zur Verbindung mit einem Anhängersteuerventil zum Steuern einer Anhängerbremse des Anhängers auf. Weiter weist das Feststellbremsmodul ein nachfolgend Ansteuerventil genanntes Ventil zum Ansteuern des Anhängersteuerventils über den Anhängersteuerventilanschluss auf. Das Ansteuerventil weist einen ersten Ansteuerventileingang auf, durch den auch im Falle eines Spannungsabfalls am Feststellbremsmodul in einem ersten Zustand des Feststellbremsmoduls zur Druckminderung und in einem alternativ einnehmbaren zweiten Zustand des Feststellbremsmoduls zur Druckerhöhung am Anhängersteuerventilanschluss Druckmittel geführt werden kann. Dabei ist das Feststellbremsmodul derart ausgebildet, dass sowohl zur Druckminderung als auch zur Druckerhöhung Druckmittel durch den ersten Ansteuerventileingang geführt werden kann. Ob es zu einer Druckminderung oder Druckerhöhung kommt, ist dabei vorzugsweise von der jeweils eingenommenen Schaltstellung wenigstens eines weiteren Ventils, insbesondere eines weiter unten beschriebenen Druckänderungsventils, abhängig. Die Schaltstellung dieses Druckänderungsventils bestimmt somit vorzugsweise den Zustand des Feststellbremsmoduls.

Somit kann ein erster Ansteuerungsventileingangsdruck ausgesteuert und durch das Ansteuerventil über den ersten Ansteuerventileingang am Anhängersteuerventilanschluss bereitgestellt werden. Im Falle eines Spannungsabfalls am Feststellbremsmodul wird der ausgesteuerte erste Ansteuerventileingangsdruck nicht gehalten, sondern bis auf einen von einer Druckquelle bereitgestellten Druck erhöht oder bis auf einen durch eine Drucksenke, wie eine Entlüftung, gegebenen Druck abgesenkt, sofern der erste Ansteuerventileingangsdruck sich nicht bereits auf dem Druckniveau der Druckquelle bzw. Drucksenke befindet. Der Spannungsabfall am Feststellbremsmodul wird durch eine aktivierte Feststellbremsfunktion veranlasst.
Das Ansteuerventil weist eine erste Schaltstellung auf zum Absperren des Anhängersteuerungsventilanschlusses gegen den ersten Ansteuerventileingang. Ferner weist das Ansteuerventil eine zweite Schaltstellung auf zum Verbinden des Anhängersteuerventilanschlusses durch das Ansteuerventil mit dem ersten Ansteuerventileingang.

Erfindungsgemäß ist vorgesehen, dass das Ansteuerventil ein bistabiles Ventil mit einer bistabilen Schaltfunktion ist. Das bistabile Ventil ist dabei insbesondere ein bistabiles Elektromagnetventil, das elektromagnetisch zwischen seinen stabilen Zuständen umgeschaltet werden kann. Alternativ wird das Ansteuerventil bzw. Bistabilventil pneumatisch bzw. hydraulisch geschaltet und durch wenigstens ein Elektromagnetventil vorgesteuert. Gemäß dem erfindungsgemäßen Verfahren schaltet das Ansteuerventil entsprechend zwischen der ersten Schaltstellung und der zweiten Schaltstellung um und verharrt ansonsten bistabil in der jeweils eingenommenen Schaltstellung.

Aufgrund der Ausbildung des Ansteuerventils als bistabiles Ventil bzw. als Bistabilventil kann das Ansteuerventil beim Parken des Fahrzeugzugs wahlweise die erste Schaltstellung oder die zweite Schaltstellung einnehmen und auch spannungslos halten. Damit ist einerseits ein Parken des Fahrzeugzugs mit betätigter Anhängerbremse möglich, nämlich wenn sich das Ansteuerventil in der zweiten Schaltstellung befindet und der Anhängersteuerventilanschluss durch das Ansteuerventil zur Druckminderung bzw. zur Entlüftung mit dem ersten Ansteuerventileingang verbunden ist. Somit kann das Feststellbremsmodul in Westeuropa bzw. Mitteleuropa eingesetzt werden.

Andererseits kann der Fahrzeugzug auch mit dem Ansteuerventil in der ersten Schaltstellung abgestellt werden und spannungslos in dieser zweiten Schaltstellung verharren. In diesem Fall bleibt der Anhängersteuerventilanschluss gegenüber dem ersten Ansteuerventileingang und somit gegenüber einer Druckminderung bzw. Entlüftung hierdurch abgesperrt, so dass der Druck am Anhängersteuerventilanschluss gehalten werden kann. Der Fahrzeugzug kann somit sicher mit gelöster Anhängerbremse abgestellt werden, so dass der Fahrzeugzug mit dem erfindungsgemäßen Feststellbremsmodul auch in Skandinavien eingesetzt werden kann, ohne hierfür mechanische Änderungen an der Konfiguration der Bremsanlage bzw. am Feststellbremsmodul vornehmen zu müssen.

Das Feststellbremsmodul bzw. eine einzige Hardware kann somit sowohl für Fahrzeuge in Westeuropa als auch in Skandinavien eingesetzt werden. Ferner ist problemlos der Einsatz eines zuvor in Westeuropa eingesetzten Fahrzeuges in Skandinavien oder umgekehrt möglich. Für beide Einsätze ist nur ein einziges Feststellbremsmodul zu entwickeln, zu produzieren und zu vertreiben. Die Erfindung senkt daher Entwicklungskosten, Produktionskosten und Logistikkosten.

Ferner sorgt die Erfindung für ein sicheres Abstellen des Fahrzeugzugs in dem jeweils gewünschten Zustand da aufgrund der Ausbildung des Ansteuerventils als Bistabilventil keine ungewollte Zustandsänderung am Anhängersteuerventilanschluss und somit an der Anhängerbremse auftritt. Insbesondere wird entweder einem langsamen Lösen der Anhängerbremse wirksam entgegengewirkt, da der Anhängersteuerventilanschluss, insbesondere gegenüber dem Umgebungsluftdruck, sicher drucklos bzw. sicher entlüftet bleibt, oder es wird einem langsamen Betätigen bzw. Einfallen der Anhängerbremse wirksam entgegengewirkt, da der Anhängersteuerventilanschluss sicher mit Druck beaufschlagt bzw. belüftet bleibt.

Gemäß einer vorteilhaften Ausführungsform des Feststellbremsmoduls weist das Feststellbremsmodul eine Steuereinrichtung zur elektrischen Ansteuerung zumindest des Ansteuerventils auf, wobei die Steuereinrichtung Programmeinstellmittel aufweist zum Einstellen des Steuerverhaltens der Steuereinrichtung nach unterschiedlichen Schaltprogrammen, wobei in dem Fall, dass die Feststellbremsfunktion zum Feststellen des Fahrzeugs aktiviert ist, das Ansteuerventil in einem ersten Schaltprogramm zum Einnehmen der ersten Schaltstellung und in einem zweiten Schaltprogramm zum Einnehmen der zweiten Schaltstellung angesteuert wird. Dabei kann das Ansteuerventil entweder direkt elektrisch angesteuert werden oder mittelbar elektrisch angesteuert werden, wobei wenigstens ein Elektromagnetventil elektrisch angesteuert wird, welches das Ansteuerventil pneumatisch bzw. hydraulisch ansteuert. Verfahrensgemäß steuert die Steuereinrichtung zumindest das Ansteuerventil elektrisch an, die Programmeinstellmittel der Steuereinrichtung stellen das Steuerverhalten der Steuereinrichtung nach den unterschiedlichen Schaltprogrammen ein, wobei in dem Fall, dass die Feststellbremsfunktion des Fahrzeugs zum Feststellen des Fahrzeugs aktiviert ist, das Ansteuerventil im ersten Schaltprogramm angesteuert wird, um die erste Schaltstellung einzunehmen, und im zweiten Schaltprogramm angesteuert wird, um die zweite Schaltstellung einzunehmen.

Auf diese Weise kann die Erfindung das Schaltverhalten des Feststellbremsmoduls elektrisch einstellen, so dass das Feststellbremsmodul wahlweise für ein Abstellen des Anhängers mit betätigter Anhängerbremse oder für ein Abstellen des Anhängers mit gelöster Anhängerbremse verwendet werden kann.

Gemäß einer besonders bevorzugten Ausführungsform weist das Feststellbremsmodul einen Feststellbremsanschluss zur Verbindung mit einem Federspeicherteil eines Federspeicherbremszylinders zum Bereitstellen der Feststellbremsfunktion des Fahrzeugs auf. Ferner weist das Feststellbremsmodul gemäß dieser Ausführungsform eine erste Leitung auf, durch die Druckmittel zum Einstellen eines Feststellbremsdrucks am Feststellbremsanschluss und zum Einstellen des ersten Ansteuerventileingangsdrucks am ersten Ansteuerventileingang geführt werden kann. Verfahrensgemäß wird Druckmittel durch die erste Leitung geführt, um den Feststellbremsdruck am Feststellbremsanschluss einzustellen und um den ersten Ansteuerventileingangsdruck am ersten Ansteuerventileingang einzustellen.

Dank dieser Ausführung der Erfindung wird vom Feststellbremsmodul zusätzlich zur Anhängerbremse die Feststellbremse des Fahrzeugs angesteuert, wobei über dieselbe erste Leitung der erste Ansteuerventileingangsdruck und somit der Druck am Anhängersteuerventilanschluss sowie der Feststellbremsdruck am Feststellbremsanschluss ausgesteuert werden kann. Dadurch ist ein zeitgleiches Betätigen sowie ein zeitgleiches Lösen der Feststellbremse des Fahrzeugs mittels des Feststellbremsdrucks und der Anhängerbremse mittels des ersten Ansteuerventileingangsdrucks bzw. des Drucks am Anhängersteuerventilanschluss möglich. Somit kann der gleiche Druck für die Anhängerbremse und für die Feststellbremse des Fahrzeugs ausgesteuert werden. Im Falle eines Spannungsabfalls am Feststellbremsmodul kann zugleich mit dem ersten Ansteuerventileingangsdruck auch der Feststellbremsdruck wahlweise bis auf den Druck an der Druckquelle erhöht oder bis auf den Druck an der Drucksenke abgesenkt werden.

Vorteilhafterweise weist das Feststellbremsmodul ein mit der ersten Leitung verbundenes bzw. das oben genannte Druckänderungsventil mit einer ersten Schaltstellung zum Verbinden der ersten Leitung mit der Drucksenke bzw. mit einer Entlüftung und mit einer zweiten Schaltstellung zum Verbinden der ersten Leitung mit einem Druckmittelanschluss zur Verbindung mit der Druckquelle bzw. mit einer Belüftung auf. Verfahrensgemäß verbindet das Druckänderungsventil in der ersten Schaltstellung die erste Leitung mit der Drucksenke und in der alternativ einnehmbaren zweiten Schaltstellung die erste Leitung mit dem Druckmittelanschluss, der zur Verbindung mit der Druckquelle vorgesehen ist.

Eine Verbindung mit einer druckmittelführenden Einrichtung meint hierbei eine druckmittelverbindende Verbindung, wobei sich in zwei derart verbundenen Einrichtungen zumindest nach endlicher Zeit derselbe Druck einstellt. Die Drucksenke ist insbesondere in dem Fall, dass das Druckmittel Druckluft ist, eine Entlüftung. Die Druckquelle ist ein Vorratsbehälter bzw. ein Kompressor bzw. eine Pumpe zum Druckaufbau.

Dank des Druckänderungsventils kann auf einfache Weise der Druck in der ersten Leitung und somit auch der Feststellbremsdruck am Fahrzeug und/oder der Anhängerbremsdruck am Anhänger eingestellt werden. In der ersten Schaltstellung des Druckänderungsventils kann im Falle eines Spannungsabfalls am Feststellbremsmodul der Anhängersteuerventilanschluss zum Druckabbau bzw. zur Verbindung mit der Drucksenke mit dem ersten Ansteuerventileingang verbunden sein. In der zweiten Schaltstellung des Druckänderungsventils kann im Falle eines Spannungsabfalls am Feststellbremsmodul der Anhängerventilanschluss zum Druckaufbau bzw. zur Verbindung mit der Druckquelle mit dem ersten Ansteuerventileingang verbunden sein. In der ersten Schaltstellung des Druckänderungsventils kann das Feststellbremsmodul seinen ersten Zustand, nicht jedoch seinen zweiten Zustand einnehmen. In der zweiten Schaltstellung des Druckänderungsventils kann das Feststellbremsmodul seinen zweiten Zustand, nicht jedoch seinen ersten Zustand einnehmen.

Vorteilhafterweise ist das Druckänderungsventil ein bistabiles 3/2-Wege-Elektromagnetventil mit einer bistabilen Schaltfunktion. Verfahrensgemäß schaltet das Druckänderungsventil elektromagnetisch zwischen der ersten und der zweiten Schaltstellung um und verharrt bistabil in der jeweils eingenommenen Schaltstellung. Somit kann die erste Leitung mit der Drucksenke oder mit der Druckquelle verbunden bleiben bzw. entlüftet oder belüftet werden, ohne hierfür fortwährend eine Spannung am Druckänderungsventil anlegen zu müssen. Lediglich zum Umschalten zwischen den Schaltzuständen muss eine Spannung an das Druckänderungsventil angelegt werden und nimmt das Druckänderungsventil Leistung auf. Dank der Ausbildung des Druckänderungsventils als Bistabilventil ist somit ein energiesparender Einsatz des Feststellbremsmoduls möglich.

Gemäß einer vorteilhaften Ausführungsform weist das Feststellbremsmodul eine zweite Leitung zur Verbindung des ersten Ansteuerventileingangs mit dem Feststellbremsanschluss auf. Verfahrensgemäß wird mittels dieser zweiten Leitung der Feststellbremsdruck auch als erster Ansteuerventileingangsdruck am ersten Ansteuerventileingang eingestellt. Dank der zweiten Leitung können die Feststellbremse des Fahrzeugs und die Anhängerbremse parallel angesteuert werden. Insbesondere ist zugleich ein Druckaufbau, ein Druckabbau oder ein Druckhalten auf demselben Druck möglich.

Gemäß einer besonderen Ausführungsform weist das Feststellbremsmodul eine dritte Leitung auf, die den ersten Ansteuerventileingang mit der ersten Leitung verbindet. Verfahrensgemäß wird mittels der dritten Leitung der Druck in der ersten Leitung auch am ersten Ansteuerventileingang eingestellt, wobei der erste Ansteuerventileingang direkt aus der ersten Leitung bzw. über das Druckänderungsventil mit Druckmittel versorgt wird. Gleiches gilt für den Feststellbremsanschluss, wenn das Feststellbremsmodul zusätzlich die zweite Leitung aufweist.

Vorteilhafterweise weist das Feststellbremsmodul eine mit der ersten Leitung verbindbare vierte Leitung auf, durch die zum Einstellen des Feststellbremsdrucks Druckmittel führbar ist. Ferner weist das Feststellbremsmodul vorteilhafterweise ein Haltenventil auf, das insbesondere als 2/2-Wege-Elektromagnetventil ausgebildet ist. Das Haltenventil weist eine erste Schaltstellung zum Verbinden der vierten Leitung mit der ersten Leitung und eine zweite Schaltstellung zum Absperren der vierten Leitung gegen die erste Leitung auf. Verfahrensgemäß wird Druckmittel durch die mit der ersten Leitung verbundene vierte Leitung geführt, um den Feststellbremsdruck einzustellen. Das Haltenventil verbindet in der ersten Schaltstellung die vierte Leitung mit der ersten Leitung und sperrt in der alternativ einnehmbaren zweiten Schaltstellung die vierte Leitung gegen die erste Leitung ab. Der Feststellbremsdruck kann somit mittels des Druckänderungsventils gemäß dem Druck in der ersten Leitung eingestellt werden und nachfolgend gehalten werden, auch wenn sich der Druck in der ersten Leitung wieder ändert. In Verbindung mit der zweiten Leitung gilt dies nicht nur für den Feststellbremsdruck, sondern auch für den ersten Ansteuerventileingangsdruck am ersten Ansteuerventileingang. Vorteilhafterweise nimmt das Haltenventil im Falle eines Spannungsabfalls am Feststellbremsmodul mittels der Kraft einer Feder seine erste Schaltstellung ein.

Wenn zusätzlich zu der vierten Leitung und dem Haltenventil auch die dritte Leitung vorgesehen ist, kann ein vom Feststellbremsdruck verschiedener Druck über die erste Leitung und die dritte Leitung am ersten Ansteuerventileingang bzw. am Anhängersteuerventilanschluss eingestellt werden, wobei sich der Feststellbremsdruck dank des Haltenventils nicht mit ändert.

Vorteilhafterweise weist das Feststellbremsmodul auch ein Relaisventil zum volumenmäßig verstärkten Bereitstellen von Druckmittel dem Feststellbremsanschluss mit dem in der ersten Leitung und/oder vierten Leitung anliegenden Feststellbremsdruck auf. Verfahrensgemäß stellt das Relaisventil dem Feststellbremsanschluss Druckmittel mit dem in der ersten Leitung und/oder vierten Leitung anliegenden Feststellbremsdruck volumenmäßig verstärkt bereit. Das Relaisventil ermöglicht ein schnelles Betätigen der Feststellbremse des Fahrzeugs und in Verbindung mit der zweiten Leitung auch der Anhängerbremse.

Gemäß einer vorteilhaften Ausführungsform des Feststellbremsmoduls ist das Ansteuerventil ein 3/2-Wegeventil und weist einen zweiten Ansteuerventileingang auf, der in der ersten Schaltstellung des Ansteuerventils den Anhängersteuerventilanschluss, insbesondere durch eine fünfte Leitung, mit einem Druckmittelanschluss zur Verbindung mit einer Druckquelle verbindet. Diese Druckquelle kann identisch mit der o. g. mit dem Druckänderungsventil in Kontakt stehenden Druckquelle sein. Verfahrensgemäß wird mittels des zweiten Ansteuerventileingangs in der ersten Schaltstellung des Ansteuerventils der Druck am Anhängersteuerventilanschluss bis auf den Druck am Druckmittelanschluss erhöht bzw. auf dem Druck am Druckmittelanschluss gehalten.

Dank dieser Ausgestaltung der Erfindung wird ein sicheres Halten des Drucks am Anhängersteuerventilanschluss unabhängig vom Feststellbremsdruck auf dem Druckniveau der Druckquelle sichergestellt, wenn das Ansteuerventil die erste Schaltstellung einnimmt, was aufgrund der Ausbildung des Ansteuerventils als Bistabilventil sowohl bei der Fahrt als auch bei abgestelltem Fahrzeugzeug dauerhaft möglich ist. Somit wird verhindert, dass bei abgestelltem Fahrzeugzug mit gemäß skandinavischem Parken gelöster Anhängerbremse die Anhängerbremse schleichend betätigt wird.

Vorzugsweise sind das Ansteuerventil und das Druckänderungsventil dabei identisch ausgebildet, so dass lediglich ein Ventiltyp als Ansteuerventil und als Druckänderungsventil in großen Stückzahlen zu produzieren ist. Dadurch werden Kosten gespart.

Gemäß einer alternativen Ausführungsform ist das Ansteuerventil ein 2/2-Wegeventil. Das Ansteuerventil weist in diesem Fall in der ersten Schaltstellung eine Sperrstellung und in der zweiten Schaltstellung eine Durchgangsstellung auf. In der Sperrstellung kann der jeweils am Anhängersteuerventilanschluss eingesteuerte Druck vorteilhaft gehalten werden.

Die erfindungsgemäße Bremsanlage weist das erfindungsgemäße Feststellbremsmodul auf. Die Bremsanlage ist eine druckmittelbetriebene, vorzugsweise pneumatische, Bremsanlage, die vorzugsweise ferner Federspeicherbremszylinder für die Feststellbremsfunktion des die Bremsanlage aufweisenden Fahrzeugs aufweist. Ferner weist die Bremsanlage vorzugsweise wenigstens einen Kompressor und wenigstens einen Druckluftvorratsbehälter als Druckquelle auf. Als Drucksenke weist die Bremsanlage ferner vorzugsweise wenigstens ein Entlüftungsventil auf. Weiter weist die Bremsanlage vorzugsweise ein Betriebsbremsmodul sowie Bremszylinder für eine Betriebsbremsfunktion des Fahrzeugs auf. Das Feststellbremsmodul und das Betriebsbremsmodul können getrennt voneinander vorgesehen oder als gemeinsames Modul ausgebildet sein. Alternativ kann das Feststellbremsmodul auch zusammen mit der elektronischen Druckluftaufbereitungseinrichtung in ein gemeinsames Modul integriert sein.

Das erfindungsgemäße Fahrzeug weist die erfindungsgemäße Bremsanlage bzw. das erfindungsgemäße Feststellbremsmodul vorzugsweise mit weiteren Komponenten der genannten Bremsanlage auf. Das Fahrzeug ist vorzugsweise ein Nutzfahrzeug und weist vorteilhafterweise einen Verbrennungsmotor sowie mittels des Verbrennungsmotors angetriebene Räder auf, die mittels der Betriebsbremse abgebremst und mittels der Feststellbremse des Fahrzeugs festgestellt werden können. Auch eine Nutzung des erfindungsgemäßen Feststellbremsmoduls als Hilfsbremse bzw. als Notfallbremse im Falle eines Ausfalls der Betriebsbremse ist möglich.

Weitere Ausführungsformen ergeben sich aus den Ansprüchen sowie aus den anhand der Zeichnung näher erläuterten Ausführungsbeispielen. In der Zeichnung zeigt:
- Fig. 1: einen Fahrzeugzug mit einem Fahrzeug und einem daran angekoppelten Anhänger in vereinfachter schematischer Darstellung, wobei das Fahrzeug eine Bremsanlage gemäß einem Ausführungsbeispiel der Erfindung mit einem Feststellbremsmodul aufweist;
- Fig. 2: ein Schaltbild eines Feststellbremsmoduls gemäß einem ersten Ausführungsbeispiel der Erfindung, insbesondere für die Bremsanlage von Fig. 1;
- Fig. 3: ein Schaltbild eines Feststellbremsmoduls gemäß einem zweiten Ausführungsbeispiel der Erfindung, insbesondere für die Bremsanlage von Fig. 1;
- Fig. 4: ein Schaltbild eines Feststellbremsmoduls gemäß einem dritten Ausführungsbeispiel der Erfindung, insbesondere für die Bremsanlage von Fig. 1, und
- Fig. 5: ein vereinfachtes Blockschaltbild eines Verfahrens zum Bereitstellen einer Feststellbremsfunktion für den Anhänger gemäß einem Ausführungsbeispiel der Erfindung.

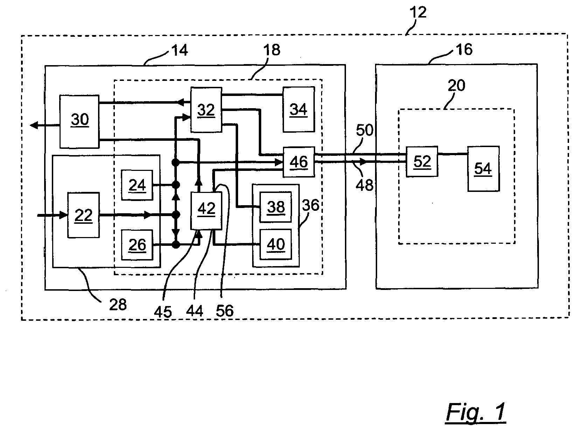

Fig. 1 zeigt in vereinfachter schematischer Darstellung einen Fahrzeugzug 12 mit einem Fahrzeug 14 und einem an das Fahrzeug 14 angekoppelten Anhänger 16. Das Fahrzeug 14 ist ein angetriebenes Zugfahrzeug, welches bspw. einen Verbrennungsmotor zum Antrieb aufweist. Der Anhänger 16 verfügt hingegen über keinen eigenen Antrieb und wird vom Fahrzeug 14 gezogen.

Das Fahrzeug 14 verfügt über eine druckluftbetriebene Bremsanlage 18, die auch eine Anhängerbremsanlage bzw. Anhängerbremse 20 des Anhängers 16 mit Druckluft versorgt und ansteuert. Die Bremsanlage 18 wird mittels eines Kompressors 22 des Fahrzeugs 14 mit Druckluft versorgt. Daneben können weitere Drucklufteinrichtungen des Fahrzeugs 14 mittels des Kompressors 22 mit Druckluft versorgt werden. Die Druckluft wird in Druckluftvorratsbehältern 24 und 26 der Bremsanlage 18 gespeichert, wobei der Druckluftvorratsbehälter 24 einem Betriebsbremskreis und der Druckluftvorratsbehälter 26 einem Feststellbremskreis zugeordnet ist. Der Einfachheit halber ist lediglich der Druckluftvorratsbehälter 24 eines Betriebsbremskreises dargestellt. Vorzugsweise weist die Bremsanlage 18 jedoch zwei Betriebsbremskreise mit jeweils einem Druckluftvorratsbehälter auf.

Der Kompressor 22 zusammen mit den Druckluftvorratsbehältern 24 und 26 bildet eine Druckquelle bzw. Belüftung 28 für die Bremsanlage 18. Ferner weist das Fahrzeug eine Drucksenke bzw. Entlüftung 30 auf, über welche die Bremsanlage 18 zum Druckabbau Druckluft an die Umgebung abführen kann. Auch weitere Einrichtungen des Fahrzeugs 14 können ggf. über diese Entlüftung 30 entlüftet werden. Alternativ können jedoch auch eine oder mehrere Entlüftungen direkt als Teile der Bremsanlage 18 vorgesehen sein.

Für eine Betriebsbremsfunktion weist die Bremsanlage 18 ein als Modulator ausgebildetes Betriebsbremsmodul 32 sowie über dieses Betriebsbremsmoduls 32 ansteuerbare Bremszylinder 34 und 36 auf. Der wenigstens eine Bremszylinder 36 ist dabei als Federspeicherbremszylinder ausgebildet und bspw. an wenigstens einer Hinterachse des Fahrzeugs 14 verbaut, wohingegen mittels des wenigstens einen Bremszylinders 34 eine Vorderachse bzw. Räder an der Vorderachse des Fahrzeugs 14 abgebremst werden.

Das Betriebsbremsmodul 32 steuert einen Betriebsbremsteil 38 des Federspeicherbremszylinders 36 an, wohingegen der Federspeicherbremszylinder 36 zusätzlich einen Federspeicherteil 40 mit einer Feder für eine Feststellbremsfunktion bzw. Hilfsbremsfunktion des Fahrzeugs 14 mittels der Kraft dieser Feder aufweist.

Die Feststellbremsfunktion des Fahrzeugs 14 wird mittels eines Feststellbremsmoduls 42 sowie mittels des Federspeicherbremszylinders 36 bereitgestellt. Zum Einlegen der Feststellbremse des Fahrzeugs 14 wird der Federspeicherteil 40 des Federspeicherbremszylinders 36 mittels des Feststellbremsmoduls 42 entlüftet, so dass die Feder des Federspeicherteils 40 den Federspeicherbremszylinder 36 betätigt und somit die Feststellbremse einlegt. Zum Lösen der Feststellbremse bzw. im Fahrbetrieb des Fahrzeugs 14 wird der Federspeicherteil 40 des Federspeicherbremszylinders 36 mittels des Feststellbremsmoduls 42 belüftet, so dass die Feststellbremse gegen die Kraft der Feder des Federspeicherteils 40 gelöst bzw. gelöst gehalten wird. Durch Aussteuern eines Feststellbremsdrucks am Feststellbremsmodul 42 ist darüber hinaus ein gestuftes Betätigen der Feststellbremse möglich und die Feststellbremse somit als Hilfsbremse, bspw. im Falle des Versagens der Betriebsbremse, einsetzbar. Das Entlüften und das Belüften des Federspeicherteils 40 des Federspeicherbremszylinders 36 erfolgt über einen Feststellbremsanschluss 44 des Feststellbremsmoduls 42. Das Feststellbremsmodul 42 wird über einen Druckmittelanschluss 45 von der Belüftung 28 belüftet.

Die Bremsanlage 18 verfügt ferner über ein Anhängersteuerventil 46 zur Ansteuerung der Anhängerbremse 20. Die Anhängerbremse 20 ist über eine Versorgungsleitung 48 und eine Steuerleitung 50 mit dem Anhängersteuerventil 46 verbunden. Über ein Anhängerbremsmodul 52 der Anhängerbremse 20 wird wenigstens ein Anhängerbremszylinder 54 gemäß einem Druck in der Steuerleitung 50 zum Betätigen der Anhängerbremse 20 mittels des Anhängerbremszylinders 54 angesteuert. Der Anhängerbremsdruck wird dabei im Fahrbetrieb vom Betriebsbremsmodul 32 ausgesteuert und über das Anhängersteuerventil 46 und die Steuerleitung 50 an die Anhängerbremsanlage 20 vermittelt.

Das Anhängersteuerventil 46 ist ferner über einen Anhängersteuerventilanschluss 56 des Feststellbremsmoduls 42 mit diesem Feststellbremsmodul 42 verbunden. Das Anhängersteuerventil 46 verfügt über eine gegenüber dem Druck am Anhängersteuerventilanschluss 56 invertierende Schaltfunktion, wobei eine Druckerniedrigung am Anhängersteuerventilanschluss 56 zu einer Druckerhöhung in der Steuerleitung 50 und eine Druckerhöhung am Anhängersteuerventilanschluss 56 zu einer Druckerniedrigung in der Steuerleitung 50 führt. Die Anhängerbremse wird somit betätigt, wenn der Anhängersteuerventilanschluss 56 entlüftet wird und gelöst, wenn der Anhängersteuerventilanschluss 56 belüftet wird, sofern die Anhängerbremse nicht mittels des Betriebsbremsmoduls 32 betätigt wird.

Beim Parken des Fahrzeugzugs 12 in Mitteleuropa oder Westeuropa müssen sowohl die Feststellbremse des Fahrzeugs 14 als auch die Anhängerbremse 20 des Anhängers 16 eingelegt bzw. betätigt werden. Das Feststellbremsmodul 42 ist dabei derart ausgebildet bzw. konfigurierbar, dass zum Parken des Fahrzeugzugs 12 sowohl der Feststellbremsanschluss 44 als auch der Anhängersteuerventilanschluss 56 entlüftet werden. Der Anhängerbremszylinder 54 wird somit belüftet. Wenn der Fahrzeugzug 12 allerdings länger abgestellt bleibt, kann es durch Druckverluste in der Anhängerbremse 20 zum Lösen der Anhängerbremse 20 kommen, so dass der Fahrzeugzug 12 allein mittels der Feststellbremse am Fahrzeug 14 gehalten werden muss. Hierfür kann die Bremsanlage 18 eine Funktion aufweisen, die über ein kurzzeitiges Entlüften der Anhängerbremse 20 beim Abstellen des Fahrzeugzugs 12 einen Test ermöglicht, ob der Fahrzeugzug 12 allein mittels der Feststellbremse des Fahrzeugs 14 gehalten werden kann. Andererseits wird jedoch in mehreren skandinavischen Ländern gefordert, dass die Anhängerbremse 20 beim Abstellen des Fahrzeugzugs 12 generell gelöst wird und gelöst bleibt. Hierfür ermöglicht das erfindungsgemäße Feststellbremsmodul 42 nicht nur ein sicheres Abstellen des Fahrzeugzugs 12 mit betätigter Anhängerbremse 20, sondern auch mit gelöster Anhängerbremse 20.

Für das Abstellen des Fahrzeugzugs 12 mit betätigter Anhängerbremse 20 oder mit gelöster Anhängerbremse 20 kann dasselbe erfindungsgemäße Feststellbremsmodul 42 und dieselbe erfindungsgemäße Bremsanlage 18 mit diesem Feststellbremsmodul 42 verwendet werden. Für das derart unterschiedliche Schaltverhalten bzw. für die derart unterschiedlichen Einsatzzwecke wird somit dieselbe Hardware eingesetzt und es sind keine bauteilmäßigen Änderungen im Falle einer alternativen Ausrüstung oder Umrüstung erforderlich. Die besondere Ausgestaltung des erfindungsgemäßen Feststellbremsmoduls 42 ermöglicht es, allein durch steuertechnische Eingriffe in das Schaltverhalten des Feststellbremsmoduls 42 beide gewünschten Funktionalitäten, nämlich das Abstellen des Anhängers 16 mit betätigter oder gelöster Anhängerbremse, sicher bereitzustellen und aufrechtzuerhalten, auch wenn das Feststellbremsmodul 42 nicht mit Spannung versorgt wird. Insbesondere kann der Anhängersteuerventilanschluss 56 in dem Fall, dass das Feststellbremsmodul 42 spannungslos ist, wahlweise entweder mit der Entlüftung 30 verbunden oder gegenüber dieser Entlüftung 30 abgesperrt bzw. mit der Belüftung 28 verbunden sein. Somit kann der Anhängersteuerventilanschluss 56 bei abgestelltem Anhänger 16 sicher entlüftet bzw. belüftet bleiben.

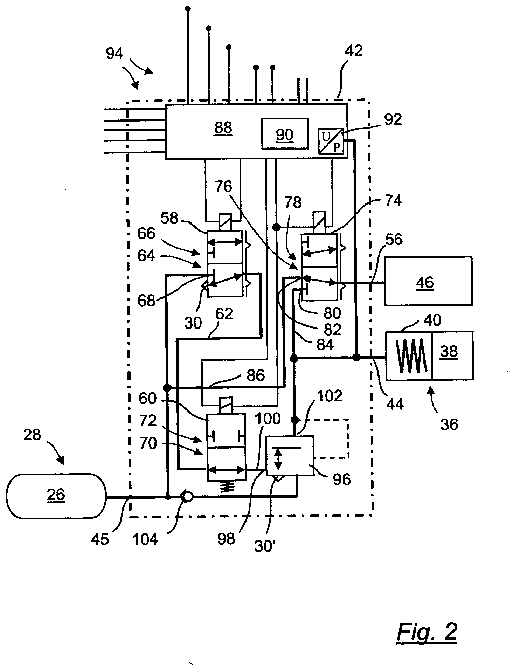

Fig. 2, Fig. 3 und Fig. 4 zeigen Schaltbilder des Feststellbremsmoduls 42 von Fig. 1 gemäß unterschiedlichen Ausführungsbeispielen der Erfindung, wobei das Feststellbremsmodul gemäß einem ersten Ausführungsbeispiel weiter mit der Bezugsziffer 42 bezeichnet wird und die Feststellbremsmodule gemäß dem zweiten und dem dritten Ausführungsbeispiel der Erfindung mit der Bezugsziffer 42' bzw. 42" bezeichnet werden. Insbesondere kann jedes erfindungsgemäße Feststellbremsmodul in der Bremsanlage 18 von Fig. 1 eingesetzt werden.

Fig. 2 zeigt ein Schaltbild des Feststellbremsmoduls 42 gemäß dem ersten Ausführungsbeispiel der Erfindung zusammen mit dem Druckluftvorratsbehälter 26 der Belüftung 28, mit dem über den Feststellbremsanschluss 44 mit dem Feststellbremsmodul 42 verbundenen Federspeicherbremszylinder 36 und mit dem über den Anhängersteuerventilanschluss 56 mit dem Feststellbremsmodul 42 verbundenen Anhängersteuerventil 46.

Das Feststellbremsmodul 42 weist ein Druckänderungsventil 58, ein Haltenventil 60 und eine erste Leitung 62 auf, welche das Druckänderungsventil 58 und das Haltenventil 60 miteinander verbindet. Das Druckänderungsventil 58 und das Haltenventil 60 dienen zusammen zur Aussteuerung eines pneumatischen Druckes, mit dem der Federspeicherteil 40 des Federspeicherbremszylinders 36 beaufschlagt wird. Dabei dient das Druckänderungsventil 58 zum Erhöhen oder Senken des Feststellbremsdrucks, wohingegen das Haltenventil 60 zum Halten oder Ändern des Feststellbremsdrucks umgeschaltet werden kann. Alternativ könnte die Funktion des Haltenventils 60 auch in das Druckänderungsventil 58 integriert sein, das somit zusätzlich eine Schaltstellung zum Halten des Drucks in der ersten Leitung 62 aufweisen würde.

Im dargestellten ersten Ausführungsbeispiel des Feststellbremsmoduls 42 gemäß Fig. 2 ist das Druckänderungsventil 58 ein 3/2-Wegeventil, das somit eine erste Schaltstellung 64 und eine zweite Schaltstellung 66 aufweist und elektromagnetisch zwischen diesen Schaltstellungen 64, 66 umgeschaltet werden kann. Ferner weist das Druckänderungsventil 58 eine bistabile Schaltfunktion auf und ist somit ein bistabiles Ventil bzw. Bistabilventil. Nach dem elektromagnetischen Umschalten verharrt das Druckänderungsventil 58 daher, insbesondere auch im Falle eines Spannungsabfalls am Feststellbremsmodul 42, in seiner jeweiligen Schaltstellung. In seiner dargestellten ersten Schaltstellung 64 verbindet das Druckänderungsventil 58 die erste Leitung 62 mit der Entlüftung 30 bzw. mit einer nicht dargestellten zur Entlüftung 30 führenden Leitung, so dass das Feststellbremsmodul 42 einen ersten Zustand einnimmt. In seiner alternativ einnehmbaren zweiten Schaltstellung 66 verbindet das Druckänderungsventil 58 hingegen die erste Leitung 62, insbesondere über den Druckmittelanschluss 45 des Feststellbremsmoduls 42 und weiter über einen Druckmitteleingang 68 des Druckänderungsventils 58, mit dem Druckluftvorratsbehälter 26 bzw. mit der Belüftung 28, so dass das Feststellbremsmodul 42 einen zweiten Zustand einnimmt. In der ersten Schaltstellung 64 des Druckänderungsventils 58 kann somit der Druck in der ersten Leitung 62 bis auf den Umgebungsdruck abgesenkt werden. In der zweiten Schaltstellung 66 des Druckänderungsventils 58 kann hingegen der Druck in der ersten Leitung 62 bis auf den von der Belüftung 28 bereitgestellten Druck erhöht werden.

Das Haltenventil 60 ist ein 2/2-Wegeventil mit einer dargestellten ersten Schaltstellung 70 und einer alternativ einnehmbaren zweiten Schaltstellung 72. In der ersten Schaltstellung 70 sorgt das Haltenventil 60 dafür, dass sich der Druck in der ersten Leitung 62 auch als Feststellbremsdruck im Federspeicherteil 44 des Federspeicherbremszylinders 36 einstellt. In der zweiten Schaltstellung 72 des Haltenventils 60 kann hingegen ein ausgesteuerter Feststellbremsdruck am Feststellbremsanschluss 44 gehalten werden, auch wenn sich durch das Druckänderungsventil 58 inzwischen ein höherer oder niedrigerer Druck in der ersten Leitung 62 eingestellt hat.

Das Haltenventil 60 ist ein monostabiles Elektromagnetventil, das elektromagnetisch angesteuert werden kann, um die zweite Schaltstellung 72 einzunehmen. Wenn das Haltenventil 60 hingegen nicht elektrisch angesteuert wird, nimmt dieses Haltenventil 60 mittels der Kraft einer Feder seine erste Schaltstellung 70 ein.

Weiter weist das Feststellbremsmodul 42 ein Ansteuerventil 74 auf, das dem Anhängersteuerventil 46 vorgeschaltet ist und das Anhängersteuerventil 46 somit ansteuert. Dabei ist das Anhängersteuerventil 46 über den Anhängersteuerventilanschluss 56 mit dem Ansteuerventil 74 verbunden.

Das Ansteuerventil 74 ist als 3/2-Wegeventil ausgebildet und weist eine dargestellte erste Schaltstellung 76 und eine alternativ einnehmbare zweite Schaltstellung 78 auf. In seiner ersten Schaltstellung 76 sperrt das Ansteuerventil 74 den Anhängersteuerventilanschluss 56 gegen einen ersten Ansteuerventileingang 80 ab und verbindet den Anhängersteuerventilanschluss 56 mit einem zweiten Ansteuerventileingang 82. In der zweiten Schaltstellung 78 des Ansteuerventils 74 ist hingegen der Anhängersteuerventilanschluss 56 mit dem ersten Ansteuerventileingang 80 verbunden und gegen den zweiten Ansteuerventileingang 82 abgesperrt.

Das Ansteuerventil 74 ist ein bistabiles Ventil bzw. Bistabilventil mit einer bistabilen Schaltfunktion, das entsprechend der Beschreibung des Druckänderungsventils 58 elektromagnetisch zwischen seinen Schaltstellungen 76 und 78 umgeschaltet werden kann und jeweils danach in seiner jeweiligen Schaltstellung 76 bzw. 78 verharrt. Insbesondere hat die Erfindung erkannt, dass auch ohne Leistungsaufnahme durch das Feststellbremsmodul 42 der erste Ansteuerventileingang 80 sicher vollständig, insbesondere bis auf den Umgebungsluftdruck, entlüftet werden bzw. entlüftet gehalten werden kann, insbesondere wenn das Druckänderungsventil 58 sich in seiner ersten Schaltstellung 64 befindet, und zudem der zweite Ansteuerventileingang 82 zumindest gegen ein Entlüften gesperrt ist oder sogar mit der Belüftung 28 verbunden sein kann. Im ersten Zustand des Feststellbremsmoduls 42 ist der erste Ansteuerventileingang 80 entlüftet und im zweiten Zustand des Feststellbremsmoduls 42 belüftet, wenn gleichzeitig das Haltenventil 60 nicht bestromt ist.

Ein Fahrzeug mit dem Feststellbremsmodul 42 bzw. das Fahrzeug 14 kann zusammen mit dem Anhänger 16 abgestellt werden, wobei in Abhängigkeit von der Schaltstellung 76, 78 des Ansteuerventils 74, der ggf. durch entsprechende elektrische Ansteuerung geändert werden kann, entweder die Anhängerbremse am Anhänger 16 betätigt oder gelöst wird bzw. bleibt.

Zum Betätigen der Anhängerbremse 20 für die Feststellbremsfunktion des Anhängers 16 wird in der zweiten Schaltstellung 78 des Ansteuerventils 74 der Anhängersteuerventilanschluss 56 zum ersten Ansteuerventileingang 80 und weiter durch eine zweite Leitung 84 entlüftet. Die zweite Leitung 84 verbindet den ersten Ansteuerventileingang 80 mit dem Feststellbremsanschluss 44 und in der zweiten Schaltstellung 78 des Ansteuerventils 74 somit auch den Anhängersteuerventilanschluss 56 mit dem Feststellbremsanschluss 44, so dass in der zweiten Schaltstellung 78 des Ansteuerventils 74 sich der Feststellbremsdruck auch als Druck am Anhängersteuerventilanschluss 56 einstellt und die Anhängerbremse 20 somit auch betätigt wird, wenn die Feststellbremse am Fahrzeug 14 durch Absenken des Feststellbremsdrucks betätigt wird, wie dies in Westeuropa bzw. Mitteleuropa gefordert ist.

In der dargestellten ersten Schaltstellung 76 des Ansteuerventils 74 ist hingegen die Anhängerbremse 20 gelöst, obwohl die Feststellbremse des Fahrzeugs 14 eingelegt bzw. obwohl der Feststellbremsanschluss 44 entlüftet ist, wenn das Druckänderungsventil 58 und das Haltenventil 60 jeweils ihre erste Schaltstellung 64 bzw. 70 einnehmen. Dabei ist der zweite Ansteuerventileingang 82 über eine fünfte Leitung 86 mit der Belüftung 28 verbunden. Der Anhängersteuerventilanschluss 56 ist somit durch das Ansteuerventil 74 belüftet, so dass die Anhängerbremse 20 gelöst ist. Bei entsprechender Ansteuerung des Ansteuerventils 74, die beim Abstellen des Fahrzeugs 14 dafür sorgt, dass das Ansteuerventil 74 seine erste Schaltstellung 76 einnimmt, bleibt diese erste Schaltstellung aufgrund der bistabilen Steuerfunktion des Ansteuerventils 74 nachfolgend erhalten, so dass die Anhängerbremse 20 sicher gelöst bleibt und das Fahrzeug 14 mit dem Anhänger 16 somit nach Vorschrift in skandinavischen Ländern abgestellt werden kann.

Das Feststellbremsmodul 42 weist ferner eine Steuereinrichtung 88 auf, die das Ansteuerventil 74, das Haltenventil 60 und das Druckänderungsventil 58 elektrisch ansteuert und somit einen Umschaltvorgang des Ansteuerventils 74 bzw. des Druckänderungsventils 58 oder das Einnehmen der zweiten Schaltstellung 72 durch das Haltenventil 60 veranlassen kann. Zum Halten der zweiten Schaltstellung 72 muss das Haltenventil 60 dauerhaft bestromt bleiben.

Die Steuereinrichtung 88 weist Programmeinstellmittel 90 auf, um das Steuerverhalten der Steuereinrichtung 88 einstellen zu können. Insbesondere kann das Ansteuerverhalten zum Ansteuern des Ansteuerventils 74 derart eingestellt sein, dass das Ansteuerventil 74 entweder beim Abstellen des Fahrzeugs seine erste Schaltstellung 76 oder seine zweite Schaltstellung 78 einnimmt. Gemäß einem ersten Schaltprogramm steuert die Steuereinrichtung 88 das Ansteuerventil 74 beim Abstellen des Fahrzeugs 14 derart an, dass das Ansteuerventil 74 seine erste Schaltstellung 76 einnimmt, wenn sich das Ansteuerventil 74 nicht bereits in seiner ersten Schaltstellung 76 befindet. Gemäß dem zweiten Schaltprogramm steuert hingegen die Steuereinrichtung 88 das Ansteuerventil 74 beim Parken des Fahrzeugs 14 derart an, dass das Ansteuerventil 74 seine zweite Schaltstellung 78 einnimmt, wenn sich das Ansteuerventil 74 nicht bereits in der zweiten Schaltstellung 78 befindet.

In jedem Fall sorgt die Steuereinrichtung 88 dafür, dass beim Abstellen des Fahrzeugs 14 die Feststellbremse des Fahrzeugs 14 eingelegt und deshalb der Feststellbremsanschluss 44 entlüftet wird, wobei das Druckänderungsventil 58 zur Entlüftung des Feststellbremsanschlusses 44 seine erste Schaltstellung 64 einnimmt.

Zur Kontrolle des Drucks am Feststellbremsanschluss 44 bzw. in der zweiten Leitung 84 bzw. am ersten Ansteuerventileingang 80 weist das Feststellbremsmodul 42 bzw. die Steuereinrichtung 88 einen ersten Drucksensor 92 auf, der ein elektrisches Signal in Abhängigkeit vom Feststellbremsdruck am Feststellbremsanschluss 44, in der zweiten Leitung 84 und am ersten Ansteuerventileingang 80 generiert und der Steuereinrichtung 88 bereitstellt. Auf diese Weise kann mittels des Druckänderungsventils 58 und des Haltenventils 60 ein geeigneter Feststellbremsdruck ausgesteuert werden.

Das Feststellbremsmodul 42 bzw. die Steuereinrichtung 88 weist mehrere Anschlüsse 94 auf, die bspw. zur elektrisch gesteuerten Betätigung der Feststellbremsfunktion bzw. der Feststellbremse am Fahrzeug 14 und mittels der Anhängerbremse 20 am Anhänger 16 dienen, die für die Spannungsversorgung vorgesehen sind oder die dem Datenaustausch mit weiteren Einrichtungen der Bremsanlage 18 bzw. des Fahrzeugs 14 dienen.

Ferner weist das Feststellbremsmodul 42 ein Relaisventil 96 auf, das mit seinem Steuereingang 98 über eine vierte Leitung 100 mit dem Haltenventil 60 verbunden und über das Haltenventil 60 mit der ersten Leitung 62 verbindbar ist. Das Relaisventil 96 stellt an seinem Relaisventilausgang 102 den in der vierten Leitung 100 ausgesteuerten Feststellbremsdruck mit einer größeren Luftmenge bereit, so dass die Feststellbremse schneller gelöst oder betätigt bzw. eingelegt werden kann. Hierfür weist das Relaisventil 96 eine Entlüftung 30' auf bzw. ist über eine nicht dargestellte Leitung mit einer Entlüftung 30' bzw. mit der Entlüftung 30 verbunden. Zur Druckluftversorgung ist das Relaisventil 96 über ein Rückschlagventil 104 mit der Belüftung 28 verbunden. Der Relaisventilausgang 102 ist mit dem Feststellbremsanschluss 44 und über die zweite Leitung 84 mit dem ersten Ansteuerventileingang 80 verbunden.

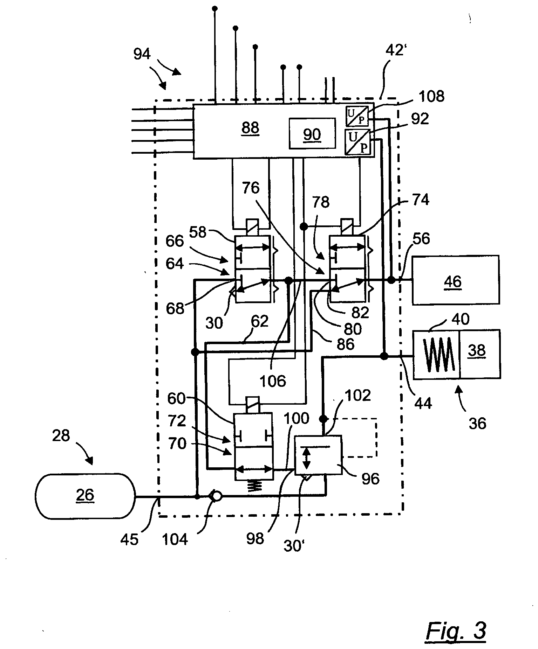

Fig. 3 zeigt das Feststellbremsmodul 42' gemäß dem zweiten Ausführungsbeispiel der Erfindung. Das Feststellbremsmodul 42' unterscheidet sich vom Feststellbremsmodul 42 im Wesentlich durch eine andere konstruktive Ausgestaltung des Ansteuerventils 74, durch eine dritte Leitung 106 bei Wegfall der zweiten Leitung 84 sowie durch einen zweiten Drucksensor 108. Das Ansteuerventil 74 ist nunmehr ebenso konstruktiv ausgestaltet wie das Druckänderungsventil 58, so dass ein einziges Bistabilventil in großen Stückzahlen produziert und sowohl als Druckänderungsventil 58 als auch als Ansteuerventil 74 im Feststellbremsmodul 42' verwendet werden kann. Eine entsprechende Verwendung bei entsprechender Ausgestaltung des Aussteuerventils 74 ist auch beim Feststellbremsmodul 42 des ersten Ausführungsbeispiels möglich.

Die dritte Leitung 106 verbindet den ersten Ansteuerventileingang 80 mit der ersten Leitung 62. Wenn das Haltenventil 60 sich in seiner zweiten Schaltstellung 72 befindet, kann somit unabhängig vom aktuell gehaltenen Feststellbremsdruck am Feststellbremsanschluss 44 ein Druck in der ersten Leistung 62 ausgesteuert und durch die dritte Leitung 106 sowie durch das Ansteuerventil 74 in seiner zweiten Schaltstellung 78 als Steuerdruck für die Feststellbremsfunktion am Anhänger 16 an den Anhängersteuerventilanschluss 56 geleitet werden. Damit lassen sich mittels des Feststellbremsmoduls 42' unterschiedliche Bremsdrücke für eine Hilfsbremsfunktion am Fahrzeug 14 und am Anhänger 16 aussteuern. Der zweite Drucksensor 108 sensiert hierfür den Druck am Anhängersteuerventilanschluss 56 und stellt entsprechende Signale der Steuereinrichtung 88 bereit, um eine Ansteuerung der Ventile 58 und 74 derart zu erreichen, dass sich am Anhängersteuerventilanschluss 56 ein gewünschter Druck einstellt.

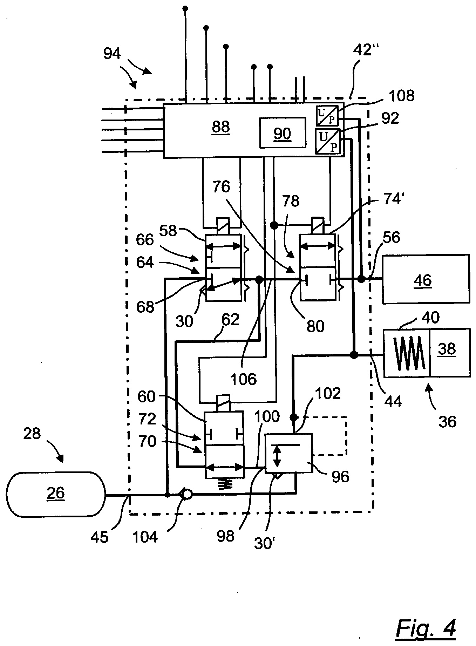

Fig. 4 zeigt das Feststellbremsmodul 42" des dritten Ausführungsbeispiels der Erfindung, welches sich vom zweiten Ausführungsbeispiel gemäß Fig. 3 durch ein gegenüber dem Ansteuerventil 74 nicht als 3/2-Wegeventil, sondern als 2/2-Wegeventil ausgebildetes Ansteuerventil 74' unterscheidet. Mit dem zweiten Ansteuerventileingang 82 gemäß den Figuren 2 und 3 entfällt daher auch die dritte Leitung 86. Der Anhängersteuerventilanschluss 56 kann daher nicht wie beim ersten und beim zweiten Ausführungsbeispiel gemäß den Figuren 2 und 3 unter Umgehung des Druckänderungsventils 58 mit der Belüftung 28 verbunden werden. Ein Belüften des Anhängersteuerventilanschlusses 56 kann über das Druckänderungsventil 58 erfolgen.

Das Ansteuerventil 74' ist wie alle erfindungsgemäßen Ansteuerventile ein bistabiles Ventil bzw. ein Ventil mit einer bistabilen Schaltcharakteristik, das die erste Schaltstellung 76 und die zweite Schaltstellung 78 aufweist. In jeder dieser Schaltstellungen 76 und 78 verharrt das Ansteuerventil 74', wenn es nicht elektromagnetisch durch entsprechende Ansteuerung mittels der Steuereinrichtung 88 in die jeweils andere Schaltstellung 76 bzw. 78 umgeschaltet wird.

In der dargestellten ersten Schaltstellung 76 ist, wie bei allen Ausführungsformen der Erfindung, der Anhängersteuerventilanschluss 56 gegen ein Entlüften zur Entlüftung 30 gesperrt. Insbesondere ist die erste Schaltstellung 76 des Ansteuerventils 74' eine Sperrstellung, die den Anhängersteuerventilanschluss 56 gegen den ersten Ansteuerventileingang 80 absperrt. Die zweite Schaltstellung 78 des Ansteuerventils 74' ist hingegen eine Durchgangsstellung, die den Anhängersteuerventilanschluss 56 mit dem ersten Ansteuerventileingang 80 und somit über die dritte Leitung 106 mit der ersten Leitung 62 verbindet, die über das Druckänderungsventil 58 belüftet oder entlüftet werden kann.

Auch mittels des Feststellbremsmoduls 42" kann bei abgestelltem Fahrzeug 14 sicher wahlweise der Anhängersteuerventilanschluss belüftet oder entlüftet gehalten werden.

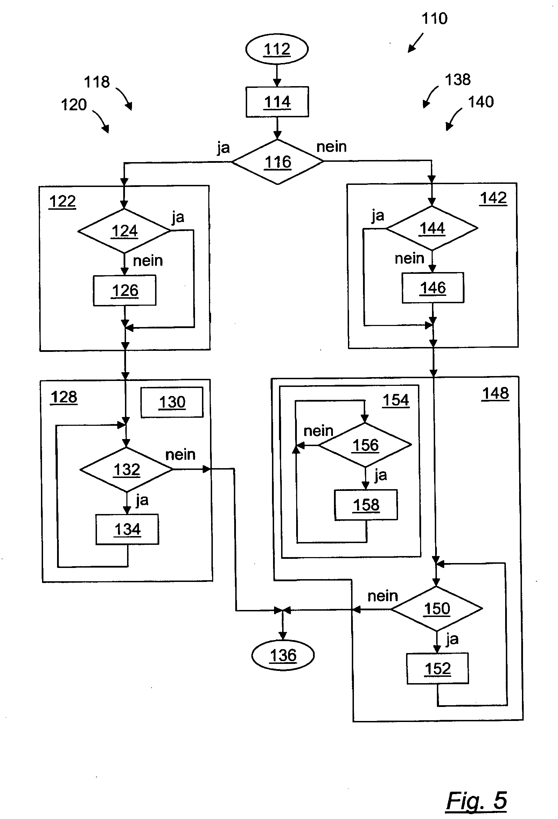

Fig. 5 zeigt ein Verfahren bzw. Teile eines Verfahrens 110 zum Bereitstellen einer Feststellbremsfunktion gemäß einem Ausführungsbeispiel der Erfindung anhand eines vereinfachten Blockschaltbildes. Insbesondere kann das Verfahren 110 mittels des erfindungsgemäßen Feststellbremsmoduls 42, 42', 42" durchgeführt werden. In dem Blockschaltbild gemäß Fig. 5 sind insbesondere Verfahrensschritte im Hinblick auf die Anhängerbremse 20 beim Betätigen der Feststellbremsfunktion bzw. der Feststellbremse dargestellt, welche insbesondere den Druck am Anhängersteuerventilanschluss 56 zur Ansteuerung der Anhängerbremse 54 über das Anhängersteuerventil 46 bei geparktem Fahrzeugzug 12 betreffen.

Das Verfahren 110 startet in einem Schritt 112 und dem Betätigen eines Tasters zum Betätigen der Feststellbremsfunktion bzw. der Feststellbremse gemäß einem Schritt 114. Die nachfolgenden Verfahrensschritte unterscheiden sich in Abhängigkeit davon, ob das Feststellbremsmodul 42, 42', 42", veranschaulicht durch eine Abfrage 116, zum skandinavischen Parken eingerichtet ist oder nicht.

Wenn das Feststellbremsmodul 42, 42', 42" zum skandinavischen Parken eingerichtet ist, steuert die Steuereinrichtung 88 die Ventile 58, 60, 74, 74' des Feststellbremsmoduls 42, 42', 42" gemäß einem Schritt 118 nach einem ersten Schaltprogramm an. Hierfür stellen die Programmeinstellmittel 90 das Steuerverhalten der Steuereinrichtung 88 gemäß einem Schritt 120 nach dem ersten Schaltprogramm ein. Das Ansteuerventil 74, 74' wird gemäß einem Schritt 122 angesteuert, um seine erste Schaltstellung 76 einzunehmen. Dabei kann dieses Ansteuern auch bedeuten, dass überhaupt keine Spannung an das Steuerventil 74 angelegt werden muss bzw. überhaupt kein Schaltimpuls generiert werden muss, wenn nämlich, veranschaulicht durch eine Abfrage 124, sich das Ansteuerventil 74, 74' bereits in seiner ersten Schaltstellung 76 befindet. Wenn sich jedoch das Ansteuerventil 74, 74' in seiner zweiten Schaltstellung 78 befindet, wechselt das Ansteuerventil 74, 74' im Zuge der Ansteuerung 122 in einem Schritt 126 von seiner zweiten Schaltstellung 78 in seine erste Schaltstellung 76. Nach dem Schritt 122 nimmt das Ansteuerventil 74, 74' somit in jedem Fall gemäß einem Schritt 128 seine erste Schaltstellung 76 ein. In dieser ersten Schaltstellung 76 sperrt das Ansteuerventil 74, 74' gemäß einem Schritt 130 den Anhängersteuerventilanschluss 56 gegen den ersten Ansteuerventileingang 80 und somit gegen die Entlüftung 30, 30' ab.

Solange gemäße einer Abfrage 132 die Feststellbremsfunktion aktiviert ist, verharrt das Ansteuerventil 74, 74' gemäß einem Schritt 134 in seiner ersten Schaltstellung 76. Der Anhängersteuerventilanschluss 56 bleibt somit gegen ein Entlüften abgesperrt bzw. belüftet, so dass die Anhängerbremse 20 gelöst bleibt. Auch wenn der Fahrzeugzug 12 nicht mehr festgestellt ist, bleibt die Anhängerbremse 20 für den normalen Fahrbetrieb gelöst, kann jedoch für eine Hilfsbremsfunktion gestuft oder vollständig betätigt werden, wobei das Ansteuerventil 74, 74' in seine zweite Schaltstellung 78 geschaltet wird. Diese Schritte können einem Ende 136 des beispielhaft dargestellten Verfahrens 110 nachfolgen.

Wenn gemäß dem Schritt 114 die Feststellbremsfunktion aktiviert wird und das Feststellbremsmodul 42, 42', 42" gemäß der Abfrage 116 nicht zum skandinavischen Parken, sondern zum Feststellen des Fahrzeugs 14 mit dem Anhänger 16 gemäß den Vorschriften in Mitteleuropa und Westeuropa eingerichtet ist, steuert die Steuereinrichtung 88 das Feststellbremsmodul 42, 42', 42" gemäß einem Schritt 138 nach einem zweiten Schaltprogramm an, wobei gemäß einem Schritt 140 die Programmeinstellmittel 90 das Steuerverhalten der Steuereinrichtung 88 nach dem zweiten Schaltprogramm einstellen. Die Steuereinrichtung 88 wird entweder einmalig oder flexibel umschaltbar mit dem ersten oder zweiten Schaltprogramm eingerichtet. Ggf. kann das erste oder zweite Schaltprogramm durch ein Softwareupdate verändert oder das Schaltverhalten vom ersten zum zweiten Schaltprogramm oder umgekehrt, bspw. durch eine Parametrierung, umgestellt werden. Ggf. können das erste und das zweite Schaltprogramm beide in Speichermitteln der Steuereinrichtung 88 hinterlegt sein und die Steuereinrichtung 88 nach dem ersten oder zweiten Schaltprogramm je nach Wunsch eingerichtet werden. Ein Umschalten zwischen dem ersten und dem zweiten Schaltprogramm kann in einer Weiterbildung in Erwiderung auf ein Eingangssignal erfolgen, das bspw. mittels eines Tasters am Fahrzeug 14 generiert wird. Alternativ wird das gewünschte Schaltprogramm mit Hilfe eines Diagnosegerätes parametriert und damit festgelegt.

Gemäß dem zweiten Schaltprogramm wird das Ansteuenrentil 74, 74' gemäß einem Schritt 142 angesteuert, um seine zweite Schaltstellung 78 einzunehmen. Dabei wird das Ansteuerventil 74, 74' in seiner zweiten Schaltstellung 78 belassen, wenn sich das Ansteuerventil 74, 74' bereits in dieser zweiten Schaltstellung 78 befindet. Andernfalls stellt die Steuereinrichtung 88 einen Schaltimpuls bereit, der gemäß einem Schritt 146 bewirkt, dass das Ansteuerventil 74, 74' von seiner ersten Schaltstellung 76 in seine zweite Schaltstellung 78 wechselt.

In Erwiderung auf den Schritt 142 nimmt das Ansteuerventil 74, 74' gemäß einem Schritt 148 somit seine zweite Schaltstellung 78 ein. Solange die Feststellbremsfunktion gemäß einer Abfrage 150 aktiviert ist bzw. das Feststellbremsmodul 42, 42', 42" keine Leistung aufnimmt, verharrt das Ansteuerventil 74, 74' aufgrund seiner bistabilen Schaltfunktion gemäß einem Schritt 152 in seiner zweiten Schaltstellung 78.

Das Ansteuerventil 74, 74' verbindet in seiner zweiten Schaltstellung 78 gemäß einem Schritt 154 den Anhängersteuerventilanschluss 56 mit dem ersten Ansteuerventileingang 80 und damit mit der Entlüftung 30, 30'. Wenn dabei gemäß einer Abfrage 156 ein Überdruck am Anhängersteuerventilanschluss 56 gegenüber dem Umgebungsdruck der Umgebung, zu der die Entlüftung 30, 30' entlüftet, anliegt, wird gemäß einem Schritt 158 Druckluft zur Druckminderung am Anhängersteuerventilanschluss 56 durch das Ansteuerventil 74, 74' zum ersten Ansteuerventileingang 80 und weiter zur Entlüftung 30, 30' geführt.

Die Erfindung ermöglicht somit auf vorteilhafte Weise das Feststellen eines Fahrzeugs mit Anhänger mit betätigter oder gelöster Anhängerbremse bei in Bezug auf seine Hardware gleich ausgebildetem Feststellbremsmodul.

## Patentansprüche

1. Feststellbremsmodul für eine druckmittelbetriebene Bremsanlage (18) eines zur Ankoppelung eines Anhängers (16) geeigneten Fahrzeugs (14) mit einer Feststellbremsfunktion, wobei das Feststellbremsmodul (42, 42', 42") aufweist:
a) einen Anhängersteuerventilanschluss (56) zur Verbindung mit einem Anhängersteuerventil (46) zum Steuern einer Anhängerbremse (20) des Anhängers (14),
b) ein Ansteuerventil (74, 74')
b1) mit einem ersten Ansteuerventileingang (80), durch den im Falle eines durch eine aktivierte Feststellbremsfunktion veranlassten Spannungsabfalls am Feststellbremsmodul (42, 42', 42")
- in einem ersten Zustand des Feststellbremsmoduls (42, 42', 42") zur Druckminderung am Anhängersteuerventilanschluss (56) Druckmittel führbar ist und zwar zur Minderung des Druckes am Anhängersteuerventilanschluss (56) und
- in einem alternativ einnehmbaren zweiten Zustand des Feststellbremsmoduls (42, 42', 42") zur Druckerhöhung am Anhängersteuerventilanschluss (56) Druckmittel führbar ist und zwar zur Erhöhung des Druckes am Anhängersteuerventilanschluss (56),
b2) mit einer ersten Schaltstellung (76) zum Absperren des Anhängersteuerventilanschlusses (56) gegen den ersten Ansteuerventileingang (80) und
b3) mit einer zweiten Schaltstellung (78) zum Verbinden des Anhängersteuerventilanschlusses (56) durch das Ansteuerventil (74, 74') mit dem ersten Ansteuerventileingang (80),
b4) wobei das Ansteuerventil (74, 74') ein bistabiles Ventil, insbesondere bistabiles Elektromagnetventil, mit einer bistabilen Schaltfunktion ist.

2. Feststellbremsmodul nach Anspruch 1,
**gekennzeichnet durch**
eine Steuereinrichtung (88) zur elektrischen Ansteuerung zumindest des Ansteuerventils (74, 74'), wobei die Steuereinrichtung (88) Programmeinstellmittel (90) aufweist zum Einstellen des Steuerverhaltens der Steuereinrichtung (88) nach unterschiedlichen Schaltprogrammen, wobei in dem Fall, dass die Feststellbremsfunktion zum Feststellen des Fahrzeugs (14) aktiviert ist, das Ansteuerventil (74, 74') in einem ersten Schaltprogramm zum Einnehmen der ersten Schaltstellung (76) und in einem zweiten Schaltprogramm zum Einnehmen der zweiten Schaltstellung (78) angesteuert wird.

3. Feststellbremsmodul nach Anspruch 1 oder 2,
**gekennzeichnet durch**
einen Feststellbremsanschluss (44) zur Verbindung mit einem Federspeicherteil (40) eines Federspeicherbremszylinders (36) zum Bereitstellen der Feststellbremsfunktion des Fahrzeugs (14) und eine erste Leitung (62), durch die Druckmittel führbar ist zum Einstellen eines Feststellbremsdrucks am Feststellbremsanschluss (44) und zum Einstellen eines ersten Ansteuerventileingangsdrucks am ersten Ansteuerventileingang (80).

4. Feststellbremsmodul nach Anspruch 3,
**gekennzeichnet durch**
eine zweite Leitung (84) zur Verbindung des ersten Ansteuerventileingangs (80) mit dem Feststellbremsanschluss (44).

5. Feststellbremsmodul nach Anspruch 3 oder 4,
**gekennzeichnet durch**
eine dritte Leitung (106) zur Verbindung des ersten Ansteuerventileingangs (80) mit der ersten Leitung (62).

6. Feststellbremsmodul nach einem der vorherigen Ansprüche,
**dadurch gekennzeichnet, dass**
das Ansteuerventil (74, 74') ein 3/2-Wegeventil ist und einen zweiten Ansteuerventileingang (82) aufweist, der in der ersten Schaltstellung (76) des Ansteuerventils (74, 74') den Anhängersteuerventilanschluss (56) mit einem Druckmittelanschluss (45) zur Verbindung mit einer Druckquelle (28) verbindet.

7. Druckmittelbetriebene Bremsanlage für ein Fahrzeug (14) mit einem Feststellbremsmodul (42, 42', 42") nach einem der Ansprüche 1 bis 6.

8. Fahrzeug, insbesondere Nutzfahrzeug, mit einem Feststellbremsmodul (42, 42', 42") nach einem der Ansprüche 1 bis 6 oder mit einer druckmittelbetriebenen Bremsanlage (18) nach Anspruch 7.

9. Verfahren zum Bereitstellen einer Feststellbremsfunktion für ein zur Ankoppelung eines Anhängers (16) geeignetes Fahrzeug (14) mittels eines Feststellbremsmoduls (42, 42', 42") nach einem der Ansprüche 1 bis 6,
a) wobei das Ansteuerventil (74, 74')
- in der ersten Schaltstellung (76) den Anhängersteuerventilanschluss (56) gegen den ersten Ansteuerventileingang (80) absperrt (130) und
- in der alternativ einnehmbaren zweiten Schaltstellung (78) den Anhängersteuerventilanschluss (56) mit dem ersten Ansteuerventileingang (80) verbindet (154),
b) wobei, insbesondere in der zweiten Schaltstellung (78), im Falle eines durch eine aktivierte Feststellbremsfunktion veranlassten Spannungsabfalls am Feststellbremsmodul (42, 42', 42") Druckmittel
- in einem ersten Zustand des Feststellbremsmoduls (42, 42', 42") zur Druckminderung am Anhängersteuerventilanschluss (56) und
- in einem alternativ einnehmbaren zweiten Zustand des Feststellbremsmoduls (42, 42', 42") zur Druckerhöhung am Anhängersteuerventilanschluss (56)
durch den ersten Ansteuerventileingang (80) geführt wird (158) und
c) wobei das Ansteuerventil (74, 74'), insbesondere elektromagnetisch, zwischen der ersten Schaltstellung (76) und der zweiten Schaltstellung (78) umschaltet (126, 146) und bistabil in der jeweils eingenommenen Schaltstellung (76, 78) verharrt (134, 152).

10. Verfahren nach Anspruch 9,
**dadurch gekennzeichnet, dass**
eine Steuereinrichtung (88) zumindest das Ansteuerventil (74, 74') elektrisch ansteuert (122, 142) und Programmeinstellmittel (90) der Steuereinrichtung (88) das Steuerverhalten nach unterschiedlichen Schaltprogrammen einstellen (120, 140), wobei in dem Fall, dass die Feststellbremsfunktion des Fahrzeugs (14) zum Feststellen des Fahrzeugs (14) aktiviert ist, das Ansteuerventil (74, 74') in einem ersten Schaltprogramm angesteuert wird (122), um die erste Schaltstellung (76) einzunehmen, und in einem zweiten Schaltprogramm angesteuert wird (142), um die zweite Schaltstellung (78) einzunehmen.

11. Verfahren nach Anspruch 9 oder 10,
**dadurch gekennzeichnet, dass**
Druckmittel durch eine erste Leitung (62) geführt wird, um einen Feststellbremsdruck an einem Feststellbremsanschluss (44), der zur Verbindung mit einem Federspeicherteil (40) eines Federspeicherbremszylinders (36) zum Bereitstellen der Feststellbremsfunktion des Fahrzeugs (14) vorgesehen ist, einzustellen und um einen ersten Ansteuerventileingangsdruck am ersten Ansteuerventileingang einzustellen.

12. Verfahren nach Anspruch 11,
**dadurch gekennzeichnet, dass**
mittels einer den ersten Ansteuerventileingang (80) mit dem Feststellbremsanschluss (44) verbindenden zweiten Leitung (84) der Feststellbremsdruck auch als erster Ansteuerventileingangsdruck am ersten Ansteuerventileingang (80) eingestellt wird.

13. Verfahren nach Anspruch 11 oder 12,
**dadurch gekennzeichnet, dass**
mittels einer den ersten Ansteuerventileingang (80) mit der ersten Leitung (62) verbindenden dritten Leitung (106) der Druck in der ersten Leitung (62) auch am ersten Ansteuerventileingang (80) eingestellt wird.

14. Verfahren nach einem der Ansprüche 9 bis 13,
**dadurch gekennzeichnet, dass**
mittels eines zweiten Ansteuerventileinganges (82) des Ansteuerventils (74) der mit einem mit einer Druckquelle (28) verbundenen Druckmittelanschluss (45) verbunden ist, in der ersten Schaltstellung (76) des Ansteuerventils (74) der Druck am Anhängersteuerventilanschluss (56) auf dem Druck am Druckmittelanschluss (45) gehalten wird, wobei das Ansteuerventil (74) ein 3/2-Wegeventil ist.

## Claims

1. Parking brake module for a pressure-medium-operated brake system (18) of a vehicle (14) which is suitable for having a trailer (16) coupled thereto, having a parking brake function, wherein the parking brake module (42, 42', 42") has:
a) a trailer control valve port (56) for connecting to a trailer control valve (46) for controlling a trailer brake (20) of the trailer (14),
b) an actuation valve (74, 74')
b1) with a first actuation valve inlet (80), through which, in the event of a drop in voltage, caused by an activated parking brake function, at the parking brake module (42, 42', 42"),
- pressure medium can be conducted for the purposes of pressure reduction at the trailer control valve port (56), specifically in order to reduce the pressure at the trailer control valve port (56), in a first state of the parking brake module (42, 42', 42"), and
- pressure medium can be conducted for the purposes of increasing pressure at the trailer control valve port (56), specifically in order to increase the pressure at the trailer control valve port (56), in a second, alternatively assumable state of the parking brake module (42, 42', 42"),
b2) having a first switching position (76) for shutting off the trailer control valve port (56) with respect to the first actuation valve inlet (80), and
b3) having a second switching position (78) for connecting the trailer control valve port (56) by means of the actuation valve (74, 74') to the first actuation valve inlet (80),
b4) wherein the actuation valve (74, 74') is a bistable valve, in particular bistable electromagnetic valve, with a bistable switching function.

2. Parking brake module according to Claim 1,
**characterized by**
a control device (88) for the electrical actuation of at least the actuation valve (74, 74'), wherein the control device (88) has program setting means (90) for setting the control characteristic of the control device (88) in accordance with different switching programs, wherein, in the event that the parking brake function is activated for the purposes of immobilizing the vehicle (14), the actuation valve (74, 74') is, in a first switching program, actuated so as to assume the first switching position (76) and, in a second switching program, actuated so as to assume the second switching position (78).

3. Parking brake module according to Claim 1 or 2,
**characterized by**
a parking brake port (44) for connecting to a spring accumulator part (40) of a spring brake cylinder (36) for providing the parking brake function of the vehicle (14), and a first line (62) through which pressure medium can be conducted for the purposes of setting a parking brake pressure at the parking brake port (44) and for setting a first actuation valve inlet pressure at the first actuation valve inlet (80).

4. Parking brake module according to Claim 3,
**characterized by**
a second line (84) for connecting the first actuation valve inlet (80) to the parking brake port (44).

5. Parking brake module according to Claim 3 or 4,
**characterized by**
a third line (106) for connecting the first actuation valve inlet (80) to the first line (62).

6. Parking brake module according to one of the preceding claims,
**characterized in that**
the actuation valve (74, 74') is a 3/2-way valve and has a second actuation valve inlet (82) which, in the first switching position (76) of the actuation valve (74, 74'), connects the trailer control valve port (56) to a pressure medium port (45) for connecting to a pressure source (28).

7. Pressure-medium-operated brake system for a vehicle (14), having a parking brake module (42, 42', 42") according to one of Claims 1 to 6.

8. Vehicle, in particular utility vehicle, having a parking brake module (42, 42', 42") according to one of Claims 1 to 6 or having a pressure-medium-operated brake system (18) according to Claim 7.

9. Method for providing a parking brake function, for a vehicle (14) which is suitable for having a trailer (16) coupled thereto, by means of a parking brake module (42, 42', 42") according to one of Claims 1 to 6,
a) wherein the actuation valve (74, 74'),
- in the first switching position (76), shuts off (130) the trailer control valve port (56) with respect to the first actuation valve inlet (80) and,
- in the alternatively assumable second switching position (78), connects (154) the trailer control valve port (56) to the first actuation valve inlet (80),
b) wherein, in particular in the second switching position (78), in the event of a drop in voltage, caused by an activated parking brake function, at the parking brake module (42, 42', 42"), pressure medium is conducted (158) through the first actuation valve inlet (80)
- for the purposes of pressure reduction at the trailer control valve port (56) in a first state of the parking brake module (42, 42', 42") and
- for the purposes of increasing pressure at the trailer control valve port (56) in an alternatively assumable second state of the parking brake module (42, 42', 42"),
and
c) wherein the actuation valve (74, 74') switches (126, 146) in particular electromagnetically between the first switching position (76) and the second switching position (78) and remains (134, 152) in the respectively assumed switching position (76, 78) in bistable fashion.

10. Method according to Claim 9,
**characterized in that**
a control device (88) electrically actuates (122, 142) at least the actuation valve (74, 74') and program setting means (90) of the control device (88) set (120, 140) the control characteristic in accordance with different switching programs, wherein, in the event that the parking brake function of the vehicle (14) is activated for the purposes of immobilizing the vehicle (14), the actuation valve (74, 74') is, in a first switching program, actuated (122) so as to assume the first switching position (76) and, in a second switching program, is actuated (142) so as to assume the second switching position (78).

11. Method according to Claim 9 or 10,
**characterized in that**
pressure medium is conducted through a first line (62) in order to set a parking brake pressure at a parking brake port (44), which is provided for connecting to a spring accumulator part (40) of a spring brake cylinder (36) for providing the parking brake function of the vehicle (14), and in order to set a first actuation valve inlet pressure at the first actuation valve inlet.

12. Method according to Claim 11,
**characterized in that**,
by means of a second line (84) which connects the first actuation valve inlet (80) to the parking brake port (44), the parking brake pressure is also set as first actuation valve inlet pressure at the first actuation valve inlet (80).

13. Method according to Claim 11 or 12,
**characterized in that**,
by means of a third line (106) which connects the first actuation valve inlet (80) to the first line (62), the pressure in the first line (62) is also set at the first actuation valve inlet (80).

14. Method according to one of Claims 9 to 13,
**characterized in that**,
by means of a second actuation valve inlet (82) of the actuation valve (74), which second actuation valve inlet is connected to a pressure medium port (45) which is connected to a pressure source (28), the pressure at the trailer control valve port (56) is, in the first switching position (76) of the actuation valve (74), held at the pressure at the pressure medium port (45), wherein the actuation valve (74) is a 3/2-way valve.

## Revendications

1. Module de frein de stationnement pour une installation de freinage entraînée par fluide sous pression (18) d'un véhicule (14) adapté au couplage d'une remorque (16) et ayant une fonction de frein de stationnement, dans lequel le module de frein de stationnement (42, 42', 42") comporte :
a) un raccordement de vanne de commande de remorque (56) destiné à être relié à une vanne de commande de remorque (46) pour commander un frein de remorque (20) de la remorque (14),
b) une vanne de commande (74, 74')
b1) comportant une première entrée de vanne de commande (80), par l'intermédiaire de laquelle, en cas de chute de tension au niveau du module de frein de stationnement (42, 42', 42") provoquée par une fonction de frein de stationnement activée,
- dans un premier état du module de frein de stationnement (42, 42', 42"), pour réduire la pression au niveau du raccord de vanne de commande de remorque (56), un fluide sous pression peut être délivré, notamment pour réduire la pression au niveau du raccord de vanne de commande de remorque (56) et,
- dans un deuxième état du module de frein de stationnement (42, 42', 42") pouvant être adopté en alternance, du fluide sous pression peut être délivré pour augmenter la pression au niveau du raccord de vanne de commande de remorque (56), notamment pour augmenter la pression au niveau du raccord de vanne de commande de remorque (56),
b2) présentant une première position de commutation (76) destinée à fermer le raccord de vanne de commande de remorque (56) par rapport à la première entrée de vanne de commande (80) et
b3) présentant une deuxième position de commutation (78) destinée à relier le raccord de vanne de commande de remorque (56) par l'intermédiaire de la vanne de commande (74, 74') à la première entrée de vanne de commande (80),
b4) dans lequel la vanne de commande (74, 74') est une vanne bistable, en particulier une électrovanne bistable, ayant une fonction de commutation bistable.

2. Module de frein de stationnement selon la revendication 1, **caractérisé par**
un dispositif de commande (88) destiné à commander électriquement au moins la vanne de commande (74, 74'), dans lequel le dispositif de commande (88) comporte des moyens de réglage programmés (90) destinés à régler le comportement de commande du dispositif de commande (88) selon différents programmes de commutation, dans lequel, dans le cas où la fonction de frein de stationnement destinée au stationnement du véhicule (14) est activée, la vanne de commande (74, 74') est commandée selon un premier programme de commutation pour adopter la première position de commutation (76) et selon un deuxième programme de commutation pour adopter la deuxième position de commutation (78).

3. Module de frein de stationnement selon la revendication 1 ou 2, **caractérisé par**
un raccord de frein de stationnement (44) destiné à être relié à une partie accumulatrice à ressort (40) d'un cylindre de frein à ressort (36) pour assurer la fonction de frein de stationnement du véhicule (14), et un premier conduit (62) par le biais duquel un fluide sous pression peut être délivré pour régler une pression de frein de stationnement au niveau du raccord de frein de stationnement (44) et pour régler une première pression d'entrée de vanne de commande au niveau de la première entrée de vanne de commande (80).

4. Module de frein de stationnement selon la revendication 3, **caractérisé par**
un deuxième conduit (84) destiné à relier la première entrée de vanne de commande (80) au raccord de frein de stationnement (44).

5. Module de frein de stationnement selon la revendication 3 ou 4, **caractérisé par**
un troisième conduit (106) destiné à relier la première entrée de vanne de commande (80) au premier conduit (62).

6. Module de frein de stationnement selon l'une des revendications précédentes, **caractérisé en ce que**
la vanne de commande (74, 74') est une vanne à 3/2 voies et possède une deuxième entrée de vanne de commande (82) qui, dans la première position de commutation (76) de la vanne de commande (74, 74'), relie le raccord de vanne de commande de remorque (56) à un raccord de fluide sous pression (45) pour la liaison à une source de pression (28) .

7. Installation de freinage entraînée par fluide sous pression pour un véhicule (14) comportant un module de frein de stationnement (42, 42', 42") selon l'une des revendications 1 à 6.

8. Véhicule, en particulier véhicule utilitaire, comportant un module de frein de stationnement (42, 42', 42") selon l'une des revendications 1 à 6 ou une installation de freinage entraînée par fluide sous pression (18) selon la revendication 7.

9. Procédé pour assurer une fonction de frein de stationnement pour un véhicule (14) adapté au couplage d'une remorque (16) au moyen d'un module de frein de stationnement (42, 42', 42") selon l'une des revendications 1 à 6,
a) dans lequel la vanne de commande (74, 74'),
- dans la première position de commutation (76), ferme (130) le raccord de vanne de commande de remorque (56) par rapport à la première entrée de vanne de commande (80) et,
- dans la deuxième position de commutation (78), relie (154) le raccord de vanne de commande de remorque (56) à la première entrée de vanne de commande (80),
b) dans lequel, en particulier dans la deuxième position de commutation (78), un fluide sous pression est délivré (158) en cas de chute de tension au niveau du module de frein de stationnement (42, 42', 42") provoquée par une fonction de frein de stationnement activée,
- dans un premier état du module de frein de stationnement (42, 42', 42"), pour réduire la pression au niveau du raccord de vanne de commande de remorque (56) et,
- dans un deuxième état pouvant être adopté en alternance du module de frein de stationnement (42, 42', 42"), pour augmenter la pression au niveau du raccord de vanne de commande de remorque (56),
par le biais de la première entrée de vanne de commande (80) et
c) dans lequel la vanne de commande (74, 74') bascule (126, 146), notamment de manière électromagnétique, entre la première position de commutation (76) et la deuxième position de commutation (78) et reste bistable (134, 152) dans la position de commutation (76, 78) respectivement adoptée.

10. Procédé selon la revendication 9,
**caractérisé en ce qu'**un dispositif de commande (88) commande électriquement (122, 142) au moins la vanne de commande (74, 74') et **en ce que** des moyens de réglage programmés (90) du dispositif de commande (88) règlent (120, 140) le comportement de commande selon différents programmes de commutation, dans lequel, dans le cas où la fonction de frein de stationnement du véhicule (14) est activée pour le stationnement du véhicule (14), la vanne de commande (74, 74') est commandée (122) selon un premier programme de commutation pour adopter la première position de commutation (76) et est commandée (142) selon un deuxième programme de commutation pour adopter la deuxième position de commutation (78).

11. Procédé selon la revendication 9 ou 10,
**caractérisé en ce qu'**un fluide sous pression est délivré par le biais d'un premier conduit (62) pour régler une pression de frein de stationnement au niveau d'un raccord de frein de stationnement (44) qui est prévu pour être relié à une partie accumulatrice à ressort (40) d'un cylindre de frein à ressort (36) pour assurer la fonction de frein de stationnement du véhicule (14) et pour régler une première pression d'entrée de vanne de commande au niveau de la première entrée de vanne de commande.

12. Procédé selon la revendication 11,
**caractérisé en ce que**,
au moyen d'un deuxième conduit (84) reliant la première entrée de vanne de commande (80) au raccord de frein de stationnement (44), la pression de frein de stationnement est également réglée en tant que première pression d'entrée de vanne de commande au niveau de la première entrée de vanne de commande (80).

13. Procédé selon la revendication 11 ou 12,
**caractérisé en ce que**,
au moyen d'un troisième conduit (106) reliant la première entrée de vanne de commande (80) au premier conduit (62), la pression dans le premier conduit (62) est également réglée au niveau de la première entrée de vanne de commande (80).

14. Procédé selon l'une des revendications 9 à 13,
**caractérisé en ce que**,
au moyen d'une deuxième entrée (82) de la vanne de commande (74) qui est reliée à un raccord de fluide sous pression (45) relié à une source de pression (28), dans la première position de commutation (76) de la vanne de commande (74), la pression au niveau du raccord de vanne de commande de remorque (56) est maintenue à la pression au niveau du raccord de fluide sous pression (45), dans lequel la vanne de commande (74) est une vanne à 3/2 voies.
